# NEUE EUROPÄISCHE PATENTSCHRIFT

(11) **EP 0 414 005 B2**
(45) Veröffentlichungstag und Bekanntmachung des Hinweises auf die Entscheidung über den Einspruch: **02.10.2002**
(45) Hinweis auf die Patenterteilung: 01.12.1993
(21) Anmeldenummer: 90114823.9
(22) Anmeldetag: 02.08.1990
(51) Int. Cl.: H01B 13/14, B29C 35/06

(54) **Verfahren zur Herstellung einer elektrischen Leitung**
Method for producing an electric line
Procédé pour fabriquer une ligne électrique

(30) Priorität: 19.08.1989 DE 3927371
(43) Veröffentlichungstag der Anmeldung: 27.02.1991
(73) Patentinhaber: kabelmetal electro GmbH, 30002 Hannover (DE)
(72) Erfinder: Obermeier, Manfred, Ing., D-8501 Eckental (DE); Gattinger, Florian, Ing., D-8501 Eckental (DE)
(74) Vertreter: Döring, Roger, Dipl.-Ing.

(56) Entgegenhaltungen:
- DE-A- 2 655 280
- DE-A- 3 014 398
- GB-A- 1 012 562
- GB-B- 1 012 562
- US-A- 1 823 885
- US-A- 3 005 739
- "Spezifikation für Flachleitungen" für die Firma Franklin Elektric Europa GmbH.
- Buch "Kabel und Leitungsfertigung" 1976, VEB Verlag Technik, Berlin Seite 255

## Beschreibung

Die Erfindung bezieht sich auf ein Verfahren zur Herstellung einer elektrischen Leitung, mit welchem auf eine einen elektrischen Leiter enthaltende Seele eine Umhüllung aus einem vernetzbaren Isoliermaterial aufgebracht wird und mit welchem die Leitung anschließend zur Vernetzung des Isoliermaterials im kontinuierlichen Durchlauf durch eine Heizzone gezogen wird (DE-Z "Draht" 19 (1968) Nr. 8, Seiten 593 bis 599).

Unter "Leitung" sollen alle elektrischen Leitungen verstanden sein, die mindestens einen elektrischen Leiter mit einer isolierenden Umhüllung aufweisen. Es kann sich also beispielsweise um eine Ader handeln, bei der ohne weitere Schichten die Umhüllung direkt auf dem Leiter aufliegt. Die Leitung kann aber auch zusätzliche Schichten aufweisen oder aus zwei oder mehr Adern bestehen, die in eine gemeinsame Umhüllung eingebettet sind.

Zur Verbesserung der mechanischen und physikalischen Eigenschaften von Isoliermaterialien ist es seit langem bekannt, dieselben durch Wärmebehandlung zu stabilisieren. Dieser Vorgang wird bei Gummi mit "Vulkanisation" und bei thermoplastischen Kunststoffen mit "Vernetzung" bezeichnet. Da beide Vorgänge zu dem gleichen Ergebnis führen, wird im folgenden der Einfachheit halber nur das Wort "vernetzen" verwendet. Es soll damit auch das Vulkanisieren von Gummi erfaßt sein.

Die Vernetzung von Isoliermaterialien für elektrische Leitungen ist in der eingangs erwähnten DE-Z "Draht" ausführlich beschrieben. Es wird dabei eine mit einer Umhüllung aus geeignetem Isoliermaterial umgebene Leitung durch eine Heizzone gezogen, an deren Ende das Isoliermaterial vernetzt ist. Dabei muß die Leitung eine bestimmte Zeit einer vorgegebenen Temperatur ausgesetzt werden, damit das Isoliermaterial die geforderten Eigenschaften, wie beispielsweise Bruchfestigkeit und Deformationswiderstand, erhält. Die Heizzone muß dafür ausreichend lang sein. Es muß außerdem sichergestellt sein, daß die Leitung beim Hindurchziehen durch die Heizzone keine Teile derselben berührt, da die Umhüllung sonst deformiert wird. Eine vollständige Vernetzungsanlage mit Heizzone und nachfolgender Kühlstrecke hat also erhebliche Abmessungen mit entsprechend großem Platzbedarf. Sie ist dementsprechend teuer und meist nur bei möglichst lückenloser Benutzung wirtschaftlich einsetzbar.

Der Erfindung liegt die Aufgabe zugrunde, ein Verfahren anzugeben, mit dem bestehende Anlagen zur Vernetzung der Umhüllungen von elektrischen Leitungen auf einfache Weise besser ausgenutzt werden können.

Diese Aufgabe wird bei einem Verfahren der eingangs geschilderten Art gemäß der Erfindung dadurch gelöst,
- daß zunächst mindestens zwei Leitungen mit ihren Umhüllungen in direkten Kontakt miteinander gebracht und dadurch entlang einer Mantellinie leicht lösbar kontinuierlich miteinanderverbunden werden,
- daß die Leitungen dann gemeinsam durch die Heizzone gezogen werden und
- daß die Leitungen vor ihrer Weiterverarbeitung voneinander getrennt werden.

Mit diesem Verfahren kann die Kapazität einer Vernetzungsanlage ohne zusätzlichen Zeitaufwand und ohne Erhöhung der Fertigungsgeschwindigkeit mindestens verdoppeltwerden. Die Leitungen, die sofort nach der Aufbringung ihrer Umhüllungen entlang einer Mantellinie miteinander verbunden werden, durchlaufen die unveränderte Heizzone gemeinsam. Da die Leitungen zumindest in der Heizzone nebeneinander liegend miteinander verbunden sind, können sie die Heizzone genauso einfach durchlaufen wie eine einzelne Leitung. Von besonderem Vorteil ist dabei, daß die Leitungen sich in der Heizzone nicht verdrehen und insbesondere nicht umeinander schlingen können. Schleifspuren und Verdrückungen an den Umhüllungen können also ausgeschlossen werden. Das macht sich besonders dann vorteilhaft bemerkbar, wenn als Heizzone eine sogenannte CV-Anlage benutzt wird, die aus einem langen Rohr besteht, in dem unter Druck stehender Dampf als Heizmedium angeordnet ist.

Das Verfahren nach der Erfindung wird im folgenden an Hand der Zeichnungen als Ausführungsbeispiel erläutert.

Es zeigen:
Fig. 1 in schematischer Darstellung eine Vorrichtung zur Durchführung des Verfahrens.
Fig. 2 einen Schnitt durch zwei Leitungen in vergrößerter Darstellung.
Fig. 3 schematisch eine Anordnung zur Trennung von mit einer Vorrichtung nach Fig. 1 vernetzten Leitungen.

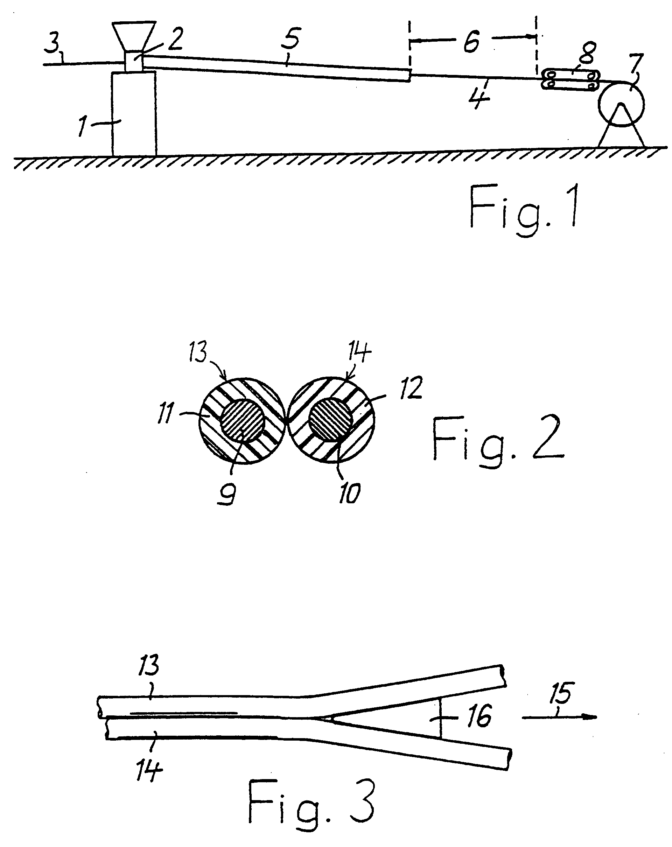

In Fig. 1 ist schematisch eine Spitzvorrichtung 1 mit einem Spritzkopf 2 dargestellt, mit der auf die Seele 3 einer beliebigen elektrischen Leitung 4 eine Umhüllung aus Isoliermaterial aufgebracht werden kann. Diese Umhüllung wird in einer an die Spritzvorrichtung 1 angeschlossenen Heizzone 5 vernetzt, die in bekannter Technik beliebig ausgeführt sein kann. Sie besteht vorzugsweise aus einem langen Rohr, in dem sich unter Druck stehender Dampf als Heizmedium befindet. Nach Durchlaufen einer durch strichpunktierte Linien angedeuteten Kühlstrecke 6 kann die fertige Leitung 4 auf eine Spule 7 aufgewickelt werden. Zum Bewegen der Leitung 4 kann beispielsweise ein schematisch angedeuteter Bandabzug 8 verwendet werden.

Das Verfahren soll beispielsweise zur Herstellung einer elektrischen Ader als "Leitung" verwendet werden, die aus einem metallischen Leiter und einer denselben direkt umgebenden Umhüllung aus einem vernetzbaren Isoliermaterial besteht. Im folgenden wird statt des Wortes "Leitung" das Wort "Ader" verwendet. Bei dem Isoliermaterial kann es sich um Gummi oder auch um einen thermoplastischen Kunststoff handeln. Zur Herstellung einer solchen Ader wird beispielsweise wie folgt vorgegangen:

Durch den Spritzkopf 2 der Spritzvorrichtung 1 werden mindestens zwei elektrische Leiter 9 und 10 hindurchgeführt. Im Spritzkopf 2 wird auf die beiden Leiter 9 und 10 jeweils eine Umhüllung 11 bzw. 12 aufgebracht, wodurch zwei Adern 13 und 14 gebildet sind. Die beiden Adern 13 und 14 werden über ihre Umhüllungen 11 und 12 entlang einer Mantellinie miteinander verbunden. Dabei werden die Umhüllungen 11 und 12 in direkten Kontakt miteinander gebracht.

Die beiden so zu einer Einheit zusammengefaßten Adern 13 und 14 werden gemeinsam durch die Heizzone 5 und die Kühlstrecke 6 geführt Sie können anschließend voneinander getrennt und damit einzeln auf Spulen aufgewickelt werden. Es ist jedoch auch möglich, die beiden Adern 13 und 14 zunächst gemeinsam auf eine Spule aufzuwickeln und erst vor der Weiterverarbeitung zu trennen.

Das Trennen kann ohne spezielles Trennwerkzeug durchgeführt werden, da die beiden Adern 13 und 14 nur relativ lose aneinander hängen. So reicht es aus, wenn an den beiden Adern 13 und 14, die in Richtung des Pfeiles 15 bewegt werden, seitwärts voneinander weg gezogen wird. Zur Unterstützung des Trennvorgangs könnte eine Art Keil 16 mit abgerundeter Spitze verwendet werden, der zwischen die beiden Adern 13 und 14 ragt. An der so fertiggestellten Ader 13 bzw. 14 ist zwar die Trenn- bzw. Berührungsstelle an der jeweiligen Umhüllung 11 bzw. 12 sichtbar. Das stört jedoch das Gesamtbild der fertiggestellten Ader nicht.

Das für die Herstellung einer Ader mit zwei gemeinsam durch die Heizzone 5 geführten Adern 13 und 14 erläuterte Verfahren ist auch dann anwendbar, wenn mehr als zwei Adern miteinander verbunden und gemeinsam durch die Heizzone 5 gezogen werden. Das Verfahren ist auch für elektrische Leitungen einzusetzen, in denen beispielsweise zwei oder mehr Adern in einer gemeinsamen Umhüllung angebracht sind. Auch von solchen Leitungen können zwei oder mehr über ihre Umhüllungen miteinander verbunden und als Einheit durch die Heizzone 5 gezogen werden.

Die Adern bzw. Leitungen haben in bevorzugter Ausführungsform gleiche Durchmesser. Sie können aber auch unterschiedliche Durchmesser haben. Auch die Umhüllungen 11 und 12 bestehen in bevorzugter Ausführungsform aus dem gleichen Material. Es kann für die Umhüllungen 11 und 12 aber auch unterschiedliches Material, insbesondere unterschiedlich gefärbtes Material, eingesetzt werden.

## Patentansprüche

1. Verfahren zur Herstellung einer elektrischen Leitung, mit welchem auf eine einen elektrischen Leiter enthaltende Seele eine Umhüllung aus einem vernetzbaren Isoliermaterial aufgebracht wird und mit welchem die Leitung anschließend zur Vernetzung des Isoliermaterials im kontinuierlichen Durchlauf durch eine Heizzone gezogen wird, **dadurch gekennzeichnet,**
- **daß** zunächst mindestens zwei Leitungen (13,14) mit ihren Umhüllungen (11,12) in direkten Kontakt miteinander gebracht und dadurch entlang einer Mantellinie leicht lösbar kontinuierlich miteinander verbunden werden,
- **daß** die Leitungen (13,14) dann gemeinsam durch die Heizzone (5) gezogen werden und
- **daß** die Leitungen (13,14) vor ihrer Weiterverarbeitung voneinander getrennt werden.

2. Verfahren nach Anspruch 1, **dadurch gekennzeichnet, daß** die Leitungen (13,14) durch ein Rohr als Heizzone (5) gezogen werden, in dem unter Druck stehender Dampf als Heizmedium angeordnet ist.

3. Verfahren nach Anspruch 1 oder 2, **dadurch gekennzeichnet, daß** die Leitungen (13,14) nach dem Verlassen der Heizzone (5) getrennt und einzeln auf Spulen aufgewickelt werden.

4. Verfahren nach Anspruch 1 oder 2, **dadurch gekennzeichnet, daß** die Leitungen (13,14) nach dem Verlassen der Heizzone (5) gemeinsam auf eine Spule aufgewickelt werden.

5. Verfahren nach einem der Ansprüche 1 bis 4, **dadurch gekennzeichnet, daß** die Leitungen (13,14) ohne Trennwerkzeug durch seitwärts voneinander weg gerichtetes Ziehen voneinander getrennt werden.

## Claims

1. Process for producing an electric line, by which a covering of a crosslinkable insulating material is applied to a core containing an electric conductor and by which, in order to crosslink the insulating material, the line is subsequently drawn continuously through a heating zone, **characterised in**
- **that** first of all at least two lines (13,14) are brought in direct contact to each other with their coverings (11,12) and thereby are continuously joined to one another along a generatrix in such a way that they are easily detachable,
- **that** the lines (13,14) are then drawn together through the heating zone (5) and
- **that** the lines (13,14) are separated from each other before their further processing.

2. Process according to Claim 1, **characterised in that** the lines (13, 14) are drawn through a tube as the heating zone (5), in which pressurised steam is arranged as the heating medium.

3. Process according to Claim 1 or 2, **characterised in that**, after leaving the heating zone (5), the lines (13, 14) are separated and wound up individually onto reels.

4. Process according to Claim 1 or 2, **characterised in that**, after leaving the heating zone (5), the lines (13, 14) are wound up together onto a reel.

5. Process according to one of Claims 1 to 4, **characterised in that** the lines (13, 14) are separated from one another without a separating tool by pulling laterally away from each other.

## Revendications

1. Procédé de fabrication d'un conducteur électrique dans lequel, sur une âme contenant un fil électrique, on rapporte une gaine constituée d'un matériau isolant réticulable et dans lequel ensuite on tire le conducteur à travers une zone chauffante, en passage continu, pour réticuler le matériau isolant, procédé **caractérisé par le fait:**
- **que** l'on arrange tout d'abord l'un à l'autre au moins deux conducteurs (13,14) par leurs gaines (11,12) le long d'une ligne latérale en contact direct et par là l'on relie les conducteurs (13,14) en continu et avec possibilité de séparation facile,
- **que** l'on tire ensuite ensemble les conducteurs (13,14) à travers la zone chauffante (5) et
- **que** l'on sépare l'un de l'autre les conducteurs (13,14) avant la poursuite de leur traitement.

2. Procédé selon la revendication 1, **caractérisé par le fait que** l'on tire les conducteurs (13,14) à travers un tube qui sert de zone chauffante (5) et dans lequel est disposée, comme fluide chauffant, de la vapeur sous pression.

3. Procédé selon la revendication 1 ou 2, **caractérisé par le fait qu'**après leur sortie de la zone chauffante (5), on sépare les conducteurs (13,14) et on les bobine isolément sur des bobines.

4. Procédé selon la revendication 1 ou 2, **caractérisé par le fait qu'**après leur sortie de la zone chauffante (5), on bobine ensemble les conducteurs (13,14) sur une bobine.

5. Procédé selon l'une des revendications 1 à 4, **caractérisé par le fait que** l'on sépare l'un de l'autre les conducteurs (13,14) sans outil de séparation, en les tirant selon des directions latérales pour les séparer l'un de l'autre.
